# EUROPEAN PATENT SPECIFICATION

(11) **EP 2 236 401 B1**
(45) Date of publication and mention of the grant of the patent: **18.05.2011**
(21) Application number: 10154251.2
(22) Date of filing: 22.02.2010
(51) Int. Cl.: B62J 27/00

(54) **Saddle ride type vehicle with bumper**
Motorrad mit Stossstange
Véhicule à selle avec pare-chocs

(30) Priority: 30.03.2009 JP 2009083657
(43) Date of publication of application: 06.10.2010
(73) Proprietor: Honda Motor Co., Ltd., Tokyo 107-8556 (JP)
(72) Inventor: Inoue Yoshihiro, Saitama 351-0193 (JP); Misaki, Kenichi, Saitama 351-0193 (JP); Kuroki, Kazuyoshi, Saitama 351-0193 (JP); Furuse, Hiroshi, Saitama 351-0193 (JP); Kawano, Sunao, Saitama 351-0193 (JP)
(74) Representative: Liska, Horst

(56) References cited:
- CN-Y- 2 677 267
- CN-Y- 201 021 333
- JP-A- 2002 264 866
- US-A1- 2002 179 353

## Description

### Technical Field

The present invention relates to an improvement in a saddle ride type vehicle having a front wheel provided on a body frame.

### Background Art

A motorcycle in which a front wheel is provided on a body frame and a front part of the body frame located on the rear side of the front wheel is formed in a shape like a bow of a boat has been known as related art (see, for example, Patent Document JP 2002-264866 A (FIG. 4)).

In FIG. 4 of Patent Document JP 2002-264866 A, a front wheel 17 (the same reference symbols as those used in the document are used here) is mounted to a body frame 11 through a front fork 16, and a bow 11 a is provided by forming into a shape like a boat's bow a front portion of the body frame 11 located on the rear side of the front wheel 17. When the front wheel 17 receives a great load and the front wheel 17 is deformed to a front portion of the body frame 11, the front wheel 17 is guided by the bow 11a to be diverted from the body frame 11, whereby a sufficient deformation amount of the front fork 16 is secured.

In the technology according to Patent Document JP 2002-264866 A, however, that front portion of the body frame 11 which is located on the rear side of the front wheel 17 must be formed in a bow-like shape. Depending on the structure of the vehicle, it may be difficult to form into the bow-like shape the body frame 11 located on the rear side of the front wheel 17.

### Problem to be Solved by the Invention

It is an object of the present invention to provide a saddle ride type vehicle in which a front wheel can be made to show a sufficient displacement amount, even in the case where it is difficult to form into a bow-like shape a front portion of a body frame located on the rear side of the front wheel.

### Means for Solving the Problem

The invention according to claim 1 provides a saddle ride type vehicle including a body frame which has a head pipe for rotatably supporting a steering shaft for a front wheel, and a main frame extending rearwards from the head pipe, with an internal combustion engine mounted to the main frame, wherein a bumper for receiving a load exerted from a vehicle front side is disposed on the front side of a lower portion of the internal combustion engine; and the bumper includes a stay part having a fastening part fastened to the internal combustion engine, a support part extending forwards from the stay part, and a load receiving part mounted to the support part and inclined against a vehicle width direction when the vehicle is viewed from the upper or lower side.

The invention according to claim 2 is characterized in that the support part includes a plurality of support pipes extending in a longitudinal direction of the vehicle; and a cross member disposed in a direction different from the direction of the support pipes is bridgingly provided between at least two support pipes arrayed in the vehicle width direction of the plurality of support pipes.

The invention according to claim 3 is characterized in that an oil cooler is provided at a front portion of the internal combustion engine; and the bumper includes a plate-shaped support plate located on the front side of the oil cooler and disposed in parallel to a front surface of the oil cooler.

The invention according to claim 4 is characterized in that the support plate is provided at an end portion thereof with a base part formed to be set along the outer shape of the internal combustion engine.

### Effect of the Invention

In the invention according to claim 1, the bumper for receiving a load exerted from the vehicle front side is extended on the front side of a lower portion of the internal combustion engine, and the bumper includes the load receiving part inclined against the vehicle width direction when the vehicle is viewed from the upper side.

When the front wheel is moved rearwards by a great load exerted on the vehicle from the front side, the front wheel makes contact with the load receiving part disposed in an inclined state. The load exerted on the load receiving part is transmitted to the support part, and is transmitted from the support part to the stay part and then from the stay part to the internal combustion engine, so that the load can be received by the internal combustion engine. Therefore, the load receiving part can satisfactorily receive the load exerted from the front wheel, and the front wheel is moved rearwards while being steered. Thus, when the front wheel is moved rearwards, the front wheel makes contact with the load receiving part and is moved along the load receiving part.

Since the front wheel displaced rearwards is diverted by the load receiving part, it becomes difficult for the front wheel to make direct contact with the internal combustion engine disposed on the rear side of the front wheel, so that the front wheel can be sufficiently displaced rearwards. Since a sufficient displacement amount of the front wheel is secured, it is possible, when the vehicle receives a great load from the front side, to smoothly absorb the load.

With the configuration of the bumper according to the present invention, a sufficient deformation amount of the front fork is secured, without forming a front end portion of the body frame into a bow-shaped part having a bow-like shape. Therefore, a sufficient deformation amount of the front fork is secured even in the case where it is difficult to provide a bow-shaped part at a front portion of the body frame located on the rear side of the front wheel. It is unnecessary to form a front portion of the body frame located on the rear side of the front wheel into a bow-shaped part having a bow-like shape or to provide a bow-shaped part at the front portion. Accordingly, the degree of freedom in designing the body frame can be enhanced.

In the invention according to claim 2, the support part includes a plurality of support pipes. When the support part is thus composed of a plurality of support pipes, inexpensive standard parts can be utilized, whereby the cost of the support part can be lowered.

In addition, the two support pipes are connected to each other by the cross member, which makes it difficult for the support pipes to be toppled when a load is exerted from the front side. When it becomes difficult for the support pipes to be toppled, the bearable load can be increased.

In the invention according to claim 3, the bumper includes the plate-shaped support plate which is located on the front side of the oil cooler provided at a front portion of the internal combustion engine and which is disposed in parallel to the front surface of the oil cooler.

When the vehicle receives a load from the front side, not only the support pipes mounted to the engine but also the load exerted on the support pipes can be received by the front surface of the oil cooler through the support plate.

Therefore, even in the case where it is difficult to secure a large number of fastening positions at which the stay part for supporting the bumper is fastened to the internal combustion engine, the load on the bumper can be borne in a large area of the front surface of the oil cooler. Besides, in this instance, even if the oil cooler is made of aluminum and the bumper is made of iron, it is possible, by enlarging the area of contact between these component parts, to receive the load exerted from the bumper by the front surface of the oil cooler.

In the invention according to claim 4, the support plate is further provided at an end portion thereof with the base part; therefore, the load exerted on the bumper can be received by the base part as a whole. Accordingly, the bumper can be supported assuredly by the larger area of the front surface of the engine.

### Brief Description of the Drawings

FIG. 1 is a left side view of a saddle ride type vehicle according to the present invention.
FIG. 2 is a bottom view of a major part of the saddle ride type vehicle according to the invention.
FIG. 3 is a front view of a major part of the saddle ride type vehicle according to the invention.
FIG. 4 is a left side view of a major part of the saddle ride type vehicle according to the invention.
FIG. 5 is a perspective view (as viewed from a skew rear side) of a bumper provided in the saddle ride type vehicle according to the invention.
FIG. 6 is a perspective view (as viewed from a skew rear side) of the bumper provided in the saddle ride type vehicle according to the invention.
FIG. 7 is a sectional view taken along line 7-7 of FIG. 3.
FIG. 8 illustrates operation of the bumper according to the invention.
FIG. 9 illustrates the operation of the bumper in the case where a steering angle of a front wheel is on the opposite side from a receiving surface of the bumper.
FIG. 10 illustrates operation (from the moment the front wheel receives a load from the front side to the moment the front wheel makes contact with the bumper) of the saddle ride type vehicle according to the invention.
FIG. 11 illustrates operation (when the front wheel receives a load at the bumper and also receives a load at a cowl stay) of the saddle ride type vehicle according to the invention.

### Mode for Carrying Out the Invention

Now, an embodiment of the present invention will be described in detail below. In the drawings and the description of the embodiment, "up (upper)," "down (lower)," "front," "rear," "left," and "right" mean the directions (sides) as viewed from a driver seated on a motorcycle. Incidentally, the drawings are to be looked at according to the posture of reference symbols.

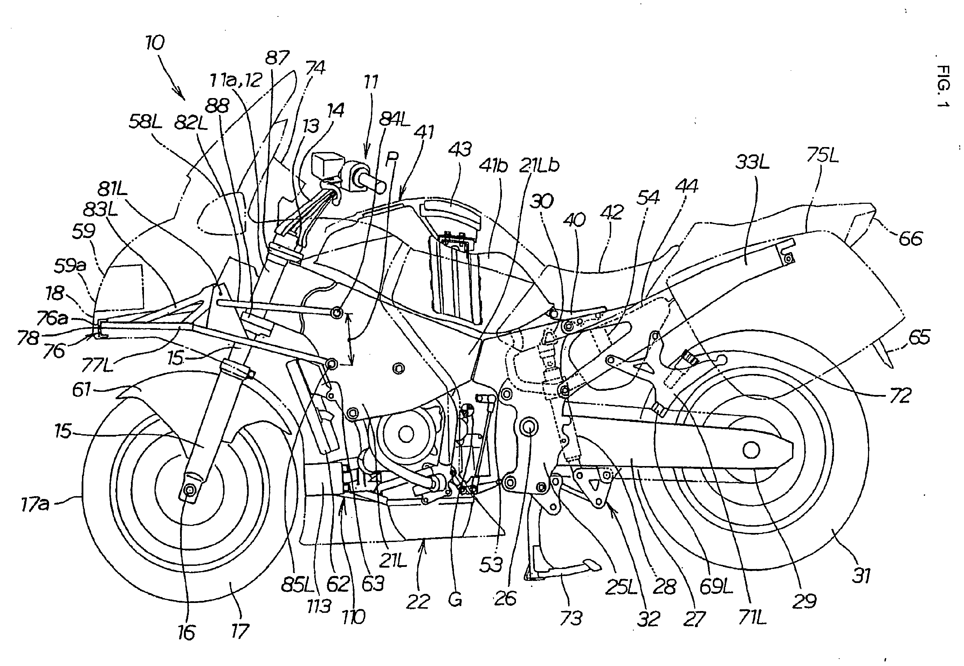

In FIG. 1, a motorcycle 10 as a saddle ride type vehicle is a vehicle including, as its main components: a head pipe 12 provided at a front end portion 11 a of a body frame 11; a steering handle bar 14 turnably provided on the head pipe 12 through a steering shaft 13; a front fork 15 connected to the steering shaft 13 and having a cushion function for absorbing vibrations exerted on the vehicle from a road surface or the like; a front wheel 17 turnably mounted to a front axle 16, which is bridgingly disposed between lower end portions of the front fork 15; main frames 21L, 21R (only 21L on the viewer's side of the drawing is shown) extended toward rear left and right sides from the head pipe 12; an engine 22 as an internal combustion engine suspended from the main frames 21L, 21R; pivot parts 25L, 25R (only 25L on the viewer's side of the drawing is shown) provided at rear lower portions of the main frames 21L, 21R; a cross member 30 bridgingly provided between upper portions of the pivot parts 25L, 25R; seat frames 33L, 33R (only 33L on the viewer's side of the drawing is shown) extended rearwards from the pivot parts 25L, 25R; a pivot shaft 26 provided on the pivot parts 25L, 25R; a rear swing arm 27 extended rearwards from the pivot shaft 26; a rear cushion unit 28 and a link mechanism 32 which are provided between the rear swing arm 27 and the main frames 21L, 21R and which support the rear swing arm 27 so that the rear swing arm 27 can swing, with the pivot shaft 26 as a center of swinging; a rear axle 29 provided at a rear end portion of the rear swing arm 27; and a rear wheel 31 as a drive wheel which is turnably mounted to the rear axle 29.

Now, the layout of component parts pertaining to an upper portion of the motorcycle will be described below.

The motorcycle 10 includes: a fuel tank 41 provided between the left and right main frames 21L, 21R; the seat frames 33L, 33R extended rearwards from rear end portions 21Lb, 21Rb (only 21Lb on the viewer's side of the drawing is shown) of the main frames 21L, 21R; a rider's seat 42 which is supported by the seat frames 33L, 33R and on which a rider is to be seated; and an air bag module 43 provided on the front side of the rider's seat 42.

The fuel tank 41 has its front portion mounted to the main frames 21L, 21R, and has its rear portion mounted to the seat frames 33L, 33R through a tank stay 40.

The air bag module 43 is disposed on the upper side of a rear portion 41b of the fuel tank 41.

The air bag module 43 has an air bag folded therein.

Now, a fuel supply system will be described. A sub fuel tank 44 is disposed at a position which is on a rear lower side of the fuel tank 41, on the lower side of the rider's seat 42, and between the left and right seat frames 33L, 33R. A fuel pump 54 for feeding out a fuel toward the side of the engine 22 is provided on the inner side of the sub fuel tank 44. The fuel tank 41 and the sub fuel tank 44 are connected to each other via a pipe 53 through which to pass the fuel. The pipe 53 is so disposed as to avoid the cross member 30.

By this configuration, the fuel in the fuel tank 41 is fed into the sub fuel tank 44, from which the fuel is supplied to the engine 22 through the fuel pump 54.

In the figure, symbols 58L, 58R (only symbol 58L on the viewer's side of the drawing is shown) denote side mirrors which are mounted to a front cowl 36 to permit the rider (driver) to look the rear side, 59 denotes a headlight, 61 denotes a front fender, 62 denotes a radiator, 63 denotes a radiator shroud provided on the rear side of the radiator 62 so as to guide an airflow, 65 denotes a rear fender, 66 denotes a tail lamp, 69L, 69R (only symbol 69L on the viewer's side of the drawing is shown) denote pillion steps as foot rests for a pillion passenger, 71L, 71R (only symbol 71L on the viewer's side of the drawing is shown) denote pillion step holders for mounting the pillion steps 69L, 69R to the seat frames, 72 denotes a rear cushion load regulating member for regulating the load on the rear cushion unit 28, 73 denotes a main stand, 74 denotes a meter unit, and symbol G denotes the center of gravity of the vehicle.

Now, a cowl stay 76 provided at a front portion of the vehicle will be described below.

The motorcycle 10 is provided with the cowl stay 76 for supporting a main cowl 18 extending on the front side of the left and right main frames 21L, 21R and covering a front portion of the vehicle. The main cowl 18 is supported by the cowl stay 76. Now, detailed structure of the cowl stay 76 will be described below.

The cowl stay 76 is so disposed that, when the vehicle is viewed from a lateral side, its front end portion 76a is located on the rear side relative to a front end portion 17a of the front wheel 17 and on the front side relative to a tip portion 59a of the headlight 59 provided on the front side of the head pipe 12 so as to illuminate the front side of the vehicle. The cowl stay 76 is disposed above the center of gravity G of the vehicle.

The cowl stay 76 includes, as its main components: left and right arm parts 77L, 77R (only symbol 77L on the viewer's side of the drawing is shown) extending forwards from the main frames 2IL, 21R; a cross part 78 connecting the front ends of the left and right arm parts 77L, 77R to each other; left and right intermediate members 81L, 81R (only symbol 81 L on the viewer's side of the drawing is shown) erectly provided at intermediate portions of the left and right arm parts 77L, 77R; left and right upper arm parts 82L, 82R (only symbol 82L on the viewer's side is shown) extending from the main frames 21L, 21R to the left and right intermediate members 81L, 81R; and left and right slant members 83L, 84R (only symbol 83L on the viewer's side is shown) as members which are bridgingly provided between the left and right intermediate members 81L, 81R and the left and right arm parts 77L, 77R and which reinforce the left and right arm parts 77L, 77R. The cowl stay 76 has its rear end portion mounted to upper support parts 84L, 84R (only symbol 84L on the viewer's side of the drawing is shown) and lower support parts 85L, 85R (only symbol 85L on the viewer's side is shown) which are provided at front portions of the main frames 21L, 21R.

Here, the upper support parts 84L, 84R and the lower support parts 85L, 85R are spaced from each other by a spacing P in the vehicle height direction.

The cross part 78 is disposed between the upper support parts 84L, 84R and the lower support parts 85L, 85R in the height direction. This ensures that, when a great load is exerted on the cross part 78 from the vehicle front side, the cowl stay front end portion 76a under the load is less liable to be tilted to the upper or lower side, as compared with the case where the cross part 78 is not disposed between the upper support parts 84L, 84R and the lower support parts 85L, 85R in the height direction. Accordingly, with the cowl stay 76 having the same shape, the load can be borne more securely and the shock absorption energy can be made greater.

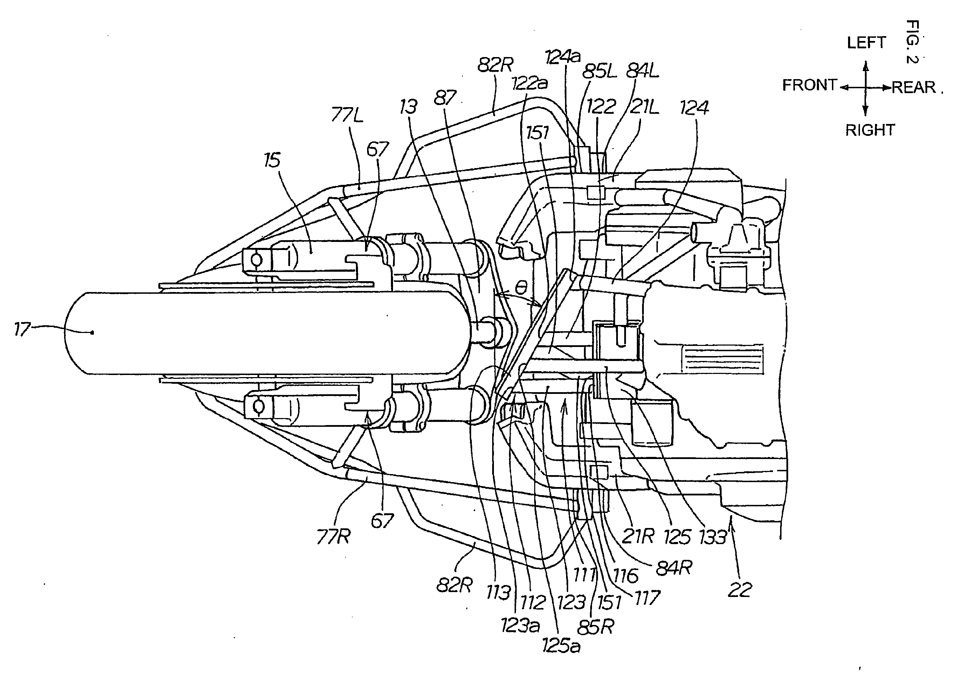

In FIG. 2, a stop bridge 87 for fixing an upper end portion of the front fork 15 is mounted to the steering shaft 13. The top bridge 87 is so provided that it can be steered relative to the head pipe (symbol 12 in FIG. 1) together with the steering shaft 13.

In the figure, front portions of the main frames 21L, 21R, the head pipe 12 for supporting the steering shaft 13, and a bottom bridge (symbol 88 in FIG. 1) disposed at a lower end portion of the head pipe 12 so as to fix an intermediate portion of the front fork 15, are omitted.

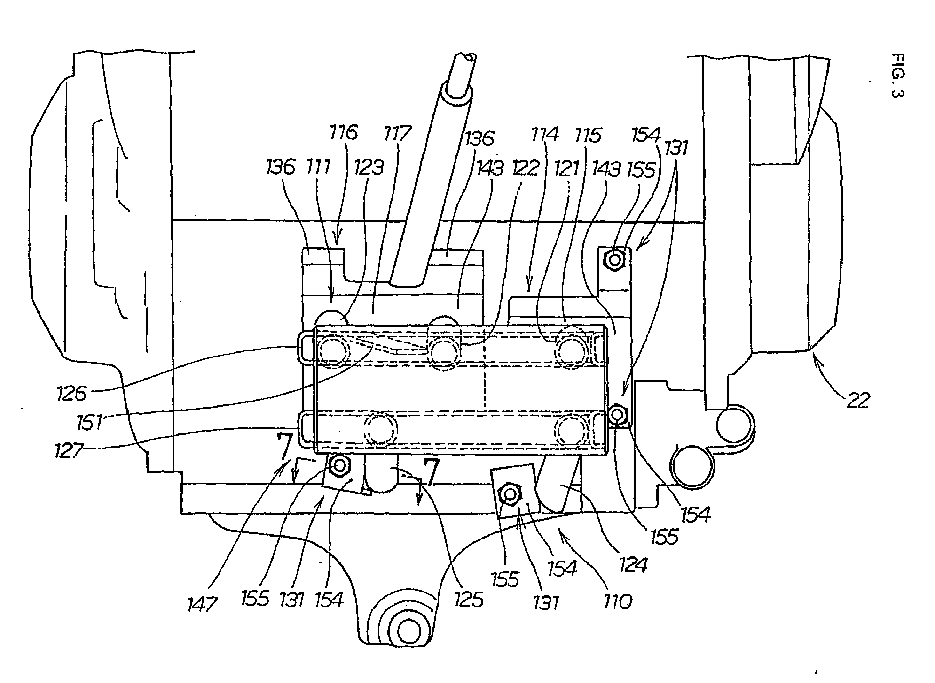

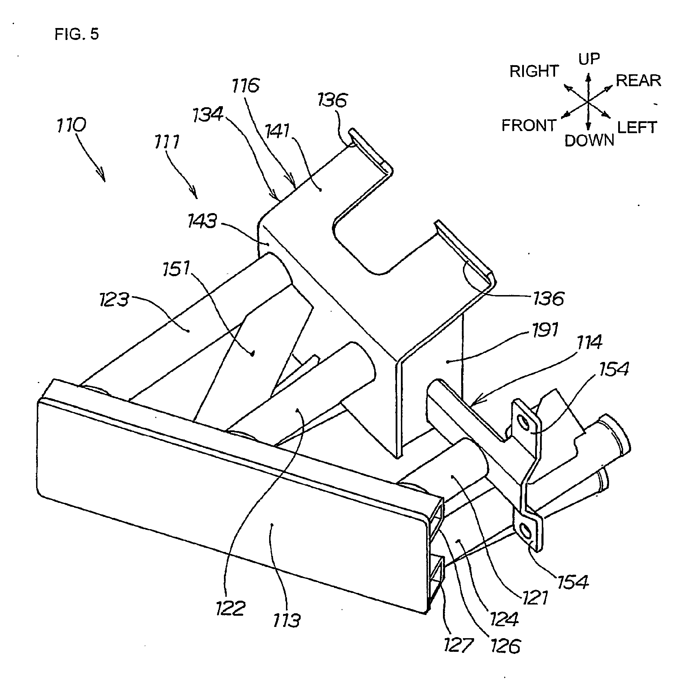

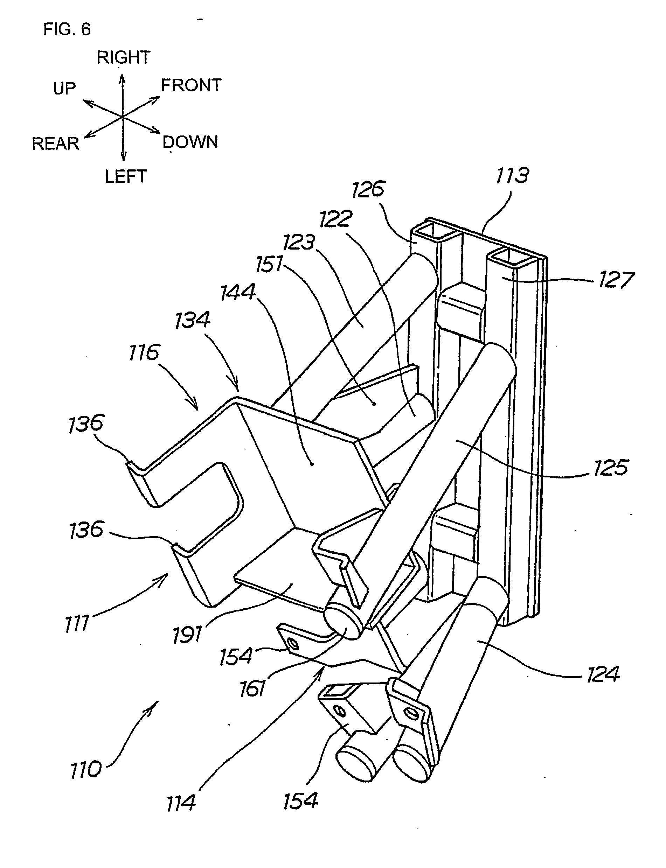

Referring to FIGS. 2 to 6, a bumper 110 will be described in detail below.

The bumper 110 is disposed at a position which is on the front side of a lower portion of the engine 22 as an internal combustion engine and on the rear side of the front wheel 17, and has a function of receiving a great load exerted from the vehicle front side.

The bumper 110 includes, as its main components: stay parts 154 having fastening holes 153 for fastening to the engine 22; a support part 111 extended forwards from the stay parts 154; and a load receiving part 113 which is mounted to a front end portion 112 of the support part and which is inclined against the vehicle width direction as viewed from the vehicle lower side.

The load receiving part 113 is a surface where a portion on the vehicle left side in the vehicle width direction is inclined by an angle θ against a portion on the vehicle right side; in this embodiment, θ = 30°.

The support part 111 includes: a fist support plate 114 disposed on a front left side of the engine 22; a first support pipe 121 extended forwards from a front surface 115 of the first support plate; a second support plate 116 disposed on a front right side of the engine 22; second and third support pipes 122, 123 extended forwards from a front surface 117 of the second support plate; an upper backing part 126 which is mounted to first to third support pipe front end portions 121 a, 122a, 123a so as to extend in the vehicle width direction and which backs the load receiving part 113; fourth and fifth support pipes 124, 125 disposed on the lower side of the first support plate 114 and extended forwards from a front surface of the engine 22; and a lower backing part 127 which is mounted to fourth and fifth support pipe front end portions 124a, 125a so as to extend in the vehicle width direction and which backs the load receiving part 113.

In addition, the first and second support plates 114, 116 and the fourth and fifth support pipes 124, 125 have fastening parts 131... (... indicates plurality, here and hereafter) for fastening the bumper 110 to the engine 22. By the fastening parts 131..., the load receiving part 113 is supported and the bumper 110 is fixed to the engine 22.

The stay parts 154... include the fastening parts 131..., and the fastening parts 131... include fastening holes 153.... The stay parts 154... are fastened to the engine 22 by fastening bolts 155....

The second support plate 116 includes: a rectangular U-shaped part 134 which is rectangular U-shaped in side view and which surrounds an oil cooler 133 projectingly disposed at the front surface of the engine 22; and base parts 136... formed at mounting end parts 135..., for mounting the rectangular U-shaped part 134 to the engine 22, so as to be set along the outer shape of the engine 22. A link plate 191 for closing the rectangular U-shaped part 134 and for linking to an end portion of the first support plate 114 is provided at a side portion of the rectangular U-shaped part 134 formed as part of the second support plate 116.

The rectangular U-shaped part 134 is composed of upper and lower support pieces 141, 142, and a receiving part 143 which is bridgingly provided between the upper and lower support pieces 141, 142 and to which the support pipe tip portions 122a to 123a are mounted.

A receiving part rear surface 144 is disposed in parallel to an oil cooler front surface 145. Specifically, an engine front portion 147 is provided with an oil cooler 133, and the receiving part rear surface 144 constituting the support plate 116 having a plate-like shape is so disposed as to be located on the front side of the oil cooler 133 and be parallel to the oil cooler front surface 145.

When a great load is exerted on the bumper 110 from the front side, the support plates 114, 115 are moved rearwards, and the rear surface 144 of the support plate 116 and the oil cooler front surface 145 make surface contact with each other.

The engine 22, formed of an aluminum casting, receives the load through surface contact, so that the load is borne in a diffused manner as compared with the case where the load is received through point contact or line contact. Accordingly, the bumper 110 can be mounted, without locally enhancing the rigidity of the engine 22.

On the front side of the engine 22, the first to fifth support pipes 121 to 125 extend in the longitudinal direction of the vehicle. As the support pipes 121 to 125 constituting the support part 111, pipe members as inexpensive standard parts can be utilized; therefore, the cost of the support part 111 can be lowered.

Incidentally, while the number of the support pipes 121 to 125 is five in this embodiment, the number may not necessarily be five, and may be an arbitrary number which is not less than two.

Furthermore, between the second support pipe 122 and the third support pipe 123, arrayed in the vehicle width direction, of the first to fifth support pipes 121 to 125, a cross member 151 is bridgingly provided in the state of being set along a direction different from the direction of the second and third support pipes 121, 123.

Since the second and third support pipes 122 and 123 are linked to each other by the cross member 151, it is possible to prevent the support pipes 122, 123 from toppling under a load exerted from the front side. In other words, a load received at the load receiving part 113 can be securely borne while reducing the possibility of buckling by the cross member 151.

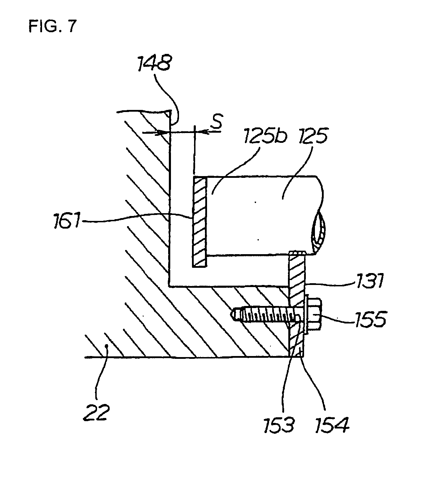

In FIG. 7, a fifth support pipe rear end portion 125b is mounted to the engine-side fastening part 131 through the stay part 154 and the fastening bolt 155. A rear surface 161, corresponding to the surface of mounting to the fifth support pipe 125 and on the side for facing the engine front surface 148, of the stay part 154 is so disposed as to form a spacing S between itself and the engine front surface 148. In this embodiment, the value of the spacing S is 1 mm.

When a great load is exerted on the fifth support pipe 125 from the vehicle front side, the stay part rear surface 161 on the side for facing the engine front surface 148 comes into contact with the engine front surface 148.

With a configuration in which the strength and plate thickness and the like of the stay part 154 are so set that the stay part 154 is elongated until the stay part rear surface 161 makes contact with the engine front surface 148, the energy due to the great load in the beginning stage of deformation of the bumper 110 can be absorbed by the stay part 154. After the rear surface 161 abuts on the engine front surface 148, the load exerted on the bumper 110 is received by the stay part 154, and the load is received by the engine front surface 148. Where no support plate is provided, thus, the support pipes are mounted to the engine 22 through the stay parts 154, 154, and, accordingly, concentration of load locally on the engine front surface can be obviated.

Specifically, the stay part 154 is welded to the fifth support pipe rear end portion 125b, which more specifically is an outer peripheral surface of the fifth support pipe 125. Therefore, the contact of the support pipe with the engine 22 and the transmission of load there can be made uniform, as compared with the case where only the fifth support pipe rear end portion 125b makes contact with the engine front surface 148 to receive the load.

Now, operation of the bumper as above-described will be described below.

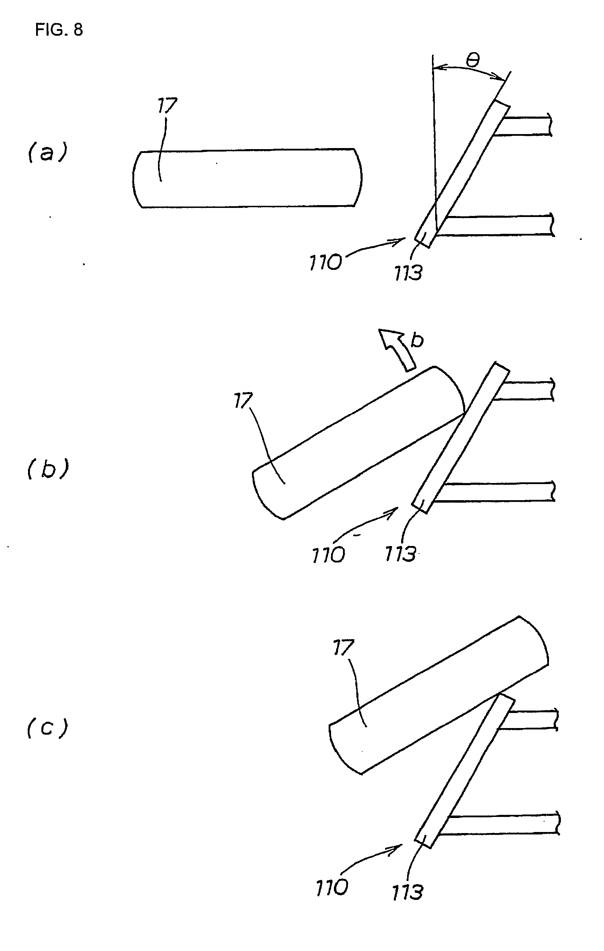

In FIG. 8(a), there is shown a condition where displacement of the front wheel 17 has not yet occurred, and the front wheel 17 and the bumper 110 are spaced from each other.

In FIG. 8(b), when the front wheel 17 is moved rearwards upon reception by the vehicle of a great load from the front side, the front wheel 17 collides on the load receiving part 113, which is so inclined that a left end portion is set on the rear side relative to the vehicle width direction in side view. Then, the front wheel 17 is moved rearwards while being turned in the direction of arrow b in the figure, namely, while being steered to the right side. Therefore, when the front wheel 17 is moved rearwards, the front wheel 17 makes contact with the load receiving part 113, and is moved along the load receiving part 113.

In FIG. 8(c), the front wheel 17 is further displaced, and is moved further rearwards along the load receiving part 113.

Since the front wheel 17 is diverted rearwards along the load receiving part 113, the front wheel 17 would not collide on the engine 22 disposed on the rear side of the front wheel 17, and the front wheel 17 can be sufficiently displaced rearwards. Since a large displacement amount of the front wheel 17 is thus secured, when the vehicle receives a great load from the front side the load can be absorbed smoothly.

With the configuration of the bumper 110 according to the present invention, a sufficient deformation amount of the front fork 15 can be secured, without forming a front end portion of the body frame into a bow-shaped part having a bow-like shape. Therefore, a sufficient deformation amount of the front fork 15 can be secured even in the case where it is difficult to provide a bow-shaped part at a front portion of the body frame 11 which is located on the rear side of the front wheel 17. As a result, it is unnecessary to form a front portion of the body frame 11 located on the rear side of the front wheel 17 into a bow-shaped part having a bow-like shape, or to provide a bow-shaped part at the front portion of the body frame 11. Accordingly, the degree of freedom in designing the body frame 11 can be enhanced.

Operation of the bumper 110 in the case where the front wheel 17 faces forwards at the time of making contact with the bumper 110 has thus been described above. In the case where the front wheel 17 is in the state of being steered to the right at the time of making contact with the bumper 110, also, the bumper 110 shows the same operation as above.

Operation of the bumper 110 in the case where the front wheel 17 is in the state of being steered to the left at the time of making contact with the bumper 110, contrary to the above-described, will now be described referring to the following drawing.

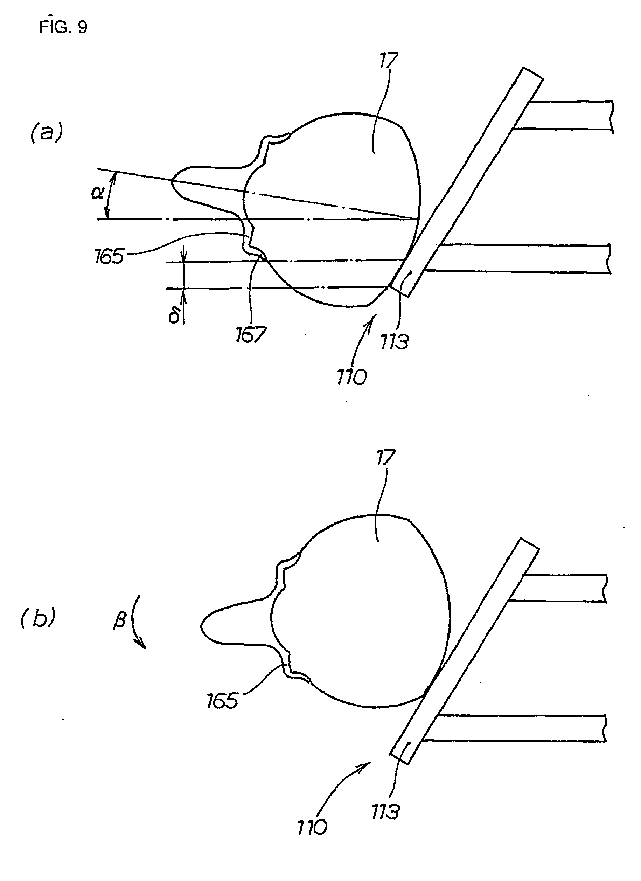

FIG. 9(a) illustrates operation of the bumper 110 in the case where the front wheel 17 makes contact with the load receiving part 113 while being in the state of being steered to the left at a steering angle α.

In FIG. 9(b), a further load is exerted on the front wheel 17, and the front wheel 17 is moved rearwards while being moved along the load receiving part 113, specifically, while being steered as indicated by β in the figure, namely, while being steered to the right side.

A maximum value of the angle α is set to be α = 10°. Within the range up to this angle value, even if the front wheel 17 makes contact with the bumper 110 while in the state of being steered to the left, the front wheel 17 can be smoothly moved rearwards while being gradually rectified through rightward steering by the function of the load receiving part 113. The setting of α = 10° makes it possible to cope with almost all cases.

It has thus been described that even when the steering direction of the front wheel 17 is on the same side as the inclination direction of the load receiving part 113, the same effect as that in the case of leftward steering can be obtained by the load receiving part 113 insofar as the steering angle is within the range up to a predetermined angle.

In addition, the length of a right end portion 164 of the load receiving part 113 is so set that the right end portion 164 protrudes from an outermost portion 167 in the width direction of a rim part 165 constituting the front wheel 17, by a length δ to the outer side in the vehicle width direction. Since the end portion of the load receiving part 113 is set on the outer side relative to the end portion of the rim part 165, at the time of steering of the front wheel 17, there is no fear that the rim part 165 might be caught by a bumper receiving part 143 to hamper smooth movement of the front wheel 17.

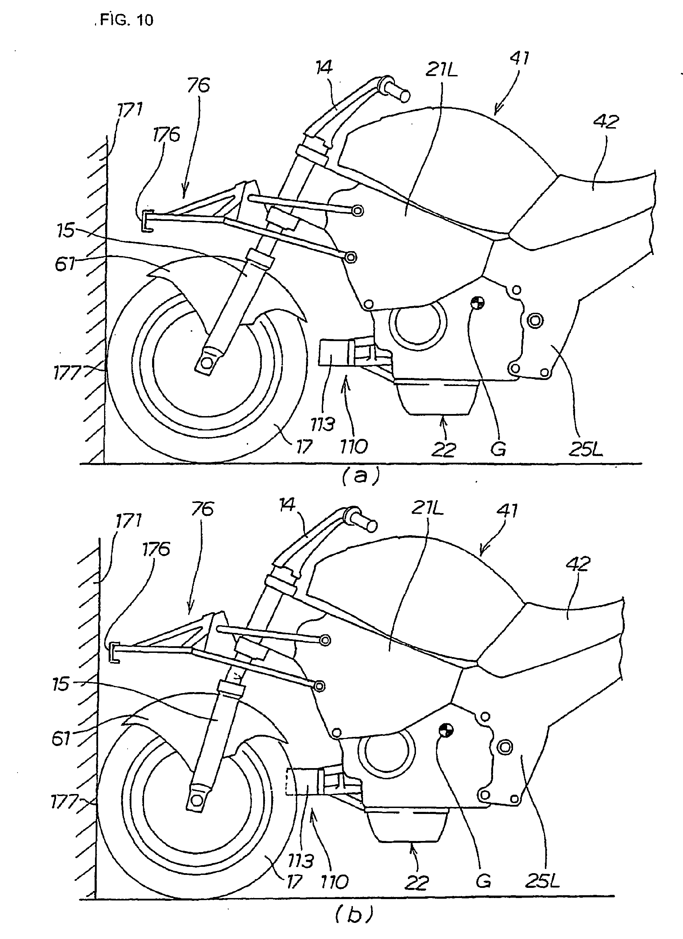

In FIG. 10(a), there is shown a condition immediately after collision of the front wheel 17 against a wall part 171 of a structure, wherein displacement of the front wheel 17 has not yet occurred.

Incidentally, in this embodiment, a cowl stay front end portion 176 is disposed on the rear side relative to a front wheel front end portion 177. In the condition where displacement of the front wheel 17 has not yet occurred, therefore, the cowl stay front end portion 176 is spaced from the wall part 171.

In FIG. 10(b), there is shown a condition where the front wheel 17 is displaced rearwards because of a great load exerted on the front wheel 17. In this instance, the deformation amount of the front wheel 17 is small, so that the cowl stay front end portion 176 has not yet collided on the wall part 171.

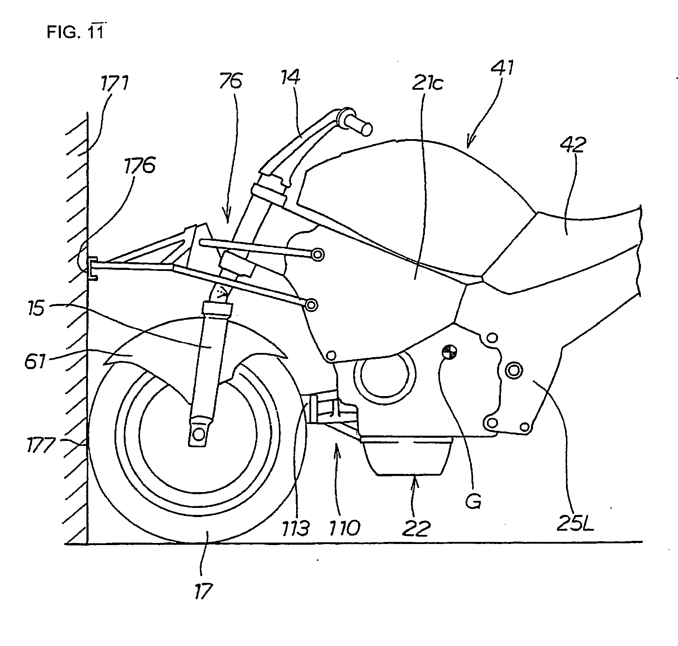

In FIG. 11, there is shown a condition where displacement of the front wheel 17 under the great load exerted on the front wheel 17 has progressed, the front wheel 17 has made contact with the load receiving part 113, and the front wheel 17 has been displaced rearwards while being guided by the load receiving part 113. In this instance, the deformation amount of the front wheel 17 has increased so that not only the front wheel 17 but also the cowl stay front end portion 176 has made collision against the wall part 171.

When the cowl stay front end portion 176 collides on the wall part 171, the center of gravity G of the vehicle is located to be lower than the cowl stay front end portion 176 in the height direction.

Therefore, when the vehicle receives a load from the front side, the vehicle tends to be rotated counterclockwise, in the figure, about its portion between the point of contact of the front wheel with the wall part and the grounding point of the front wheel; that is, a so-called pitching behavior is liable to be generated.

In connection with this point, in the present invention, the cowl stay front end portion 176 is disposed above the center of gravity G. With such a layout, even when a great load is exerted on the vehicle from the front side, part of the load can be received by the cowl stay front end portion 176 and, therefore, the pitching behavior of the vehicle can be restrained. In motorcycles on which an air bag is mounted, in the cases where it is appropriate to restrain the pitching, adoption of the structure according to the present invention is effective.

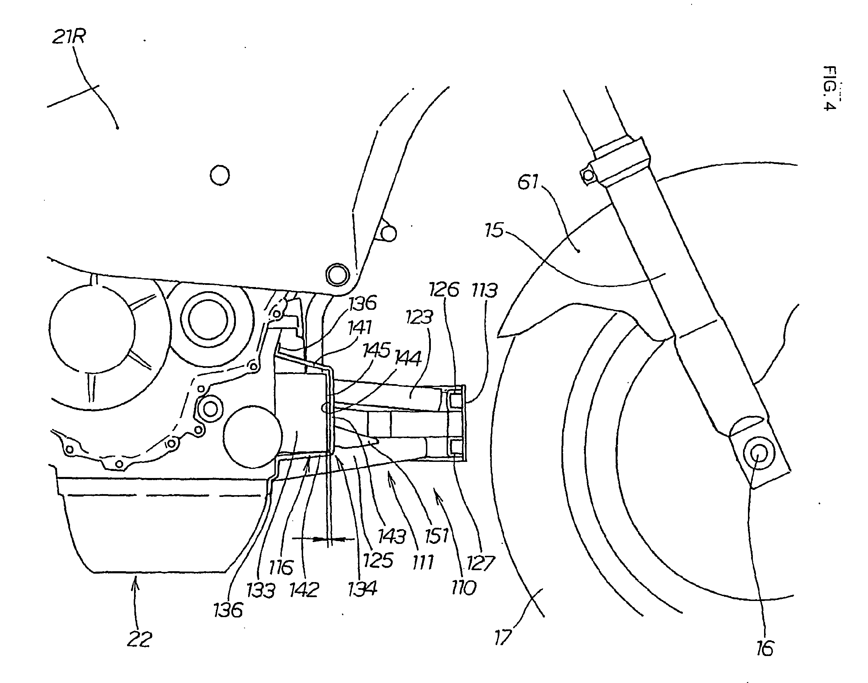

Returning to FIG. 4, when a load is exerted on the vehicle from the front side, the load can be received at a front lower portion of the engine 22 by the stay parts 154 fastened to the engine 22 and the support pipes 121 to 125 making contact with the engine 22, and, further, the load received by the support pipes 121 to 125 can be received by the oil cooler front surface 145 through the support plate 116.

Therefore, the bumper 110 can be favorably supported in a large area of the engine front surface 148, even in the cases where it is difficult to secure an area of a support part for supporting the bumper 110 on the engine 22 or where the rigidity of the engine 22 is low as compared with the bumper 110.

Furthermore, since the mounting end portion to which the support plate 116 is mounted is provided further with base parts 181..., the load exerted on the bumper 110 can be received by the base parts as a whole. Accordingly, the bumper 110 can be supported securely in an area larger than the area of the engine front surface 148.

Incidentally, while the present invention has been applied to a motorcycle in the embodiment above, the invention is also applicable to other saddle ride type vehicles.

### Industrial Applicability

The present invention is preferably applicable to a motorcycle in which a bumper for receiving a great load exerted from the front side is disposed on the front side of an internal combustion engine.

The invention is directed to provide a saddle ride type vehicle in which a front wheel can be made to show a sufficient displacement amount even in the case where it is difficult to form into a bow-like shape a front portion of a body frame located on the rear side of the front wheel.

The saddle ride type vehicle includes the body frame 11 having a head pipe 12 for rotatably supporting a steering shaft 13 for the front wheel 17, and main frames 21L, 21R extending rearwards from the head pipe 12, and an engine 22 is mounted to the main frames 21L, 21R. A bumper 110 is disposed on the front side of a lower portion of the engine 22, and the bumper 110 includes a support part 111 extended forwards from the engine 22, and a load receiving part 113 mounted to the support part 111 and inclined against the vehicle width direction.

## Claims

1. A saddle ride type vehicle (10) comprising a body frame (11) which has a head pipe (12) for rotatably supporting a steering shaft (13) for a front wheel (17), and a main frame (21L, 21R) extending rearwards from the head pipe (12), with an internal combustion engine (22) mounted to the main frame (21L, 21R),
wherein a bumper (110) for receiving a load exerted from a vehicle front side is disposed on the front side of a lower portion of the internal combustion engine (22); and
the bumper (110) includes a stay part having a fastening part (131) fastened to the internal combustion engine (22), a support part (111) extending forwards from the stay part, and a load receiving part (113) mounted to the support part (111) and inclined against a vehicle width direction when the vehicle is viewed from the upper or lower side.

2. The saddle ride type vehicle (10) according to claim 1,
wherein the support part (111) includes a plurality of support pipes (121, 122, 123, 124, 125) extending in a longitudinal direction of the vehicle; and
a cross member (151) disposed in a direction different from the direction of the support pipes (121, 122, 123, 124, 125) is bridgingly provided between at least two support pipes arrayed in the vehicle width direction of the plurality of support pipes (121, 122, 123, 124, 125).

3. The saddle ride type vehicle according to claim 1 or 2,
wherein an oil cooler (133) is provided at a front portion of the internal combustion engine (22); and
the bumper (110) comprises a plate-shaped support plate (116) located on the front side of the oil cooler (133) and disposed in parallel to a front surface of the oil cooler (133).

4. The saddle ride type vehicle (10) according to claim 3, wherein the support plate (116) is provided at an end portion thereof with a base part (136) formed to be set along the outer shape of the internal combustion engine (22).

## Patentansprüche

1. Fahrzeug (10) vom Typ mit Aufsitzsattel, umfassend einen Rumpfrahmen (11), der ein Kopfrohr (12) zum drehbaren Lagern einer Lenkwelle (13) für ein Vorderrad (17) sowie einen Hauptrahmen (21L, 21R), der sich von dem Kopfrohr (12) nach hinten erstreckt, aufweist, wobei ein Verbrennungsmotor (22) an dem Hauptrahmen (21L, 21R) angebracht ist,
worin ein Stoßfänger (110) zur Aufnahme einer von der Fahrzeugvorderseite her einwirkenden Last an der Vorderseite eines unteren Abschnitts des Verbrennungsmotors (22) angeordnet ist; und der Stoßfänger (110) ein Strebenteil, das ein an dem Verbrennungsmotor (22) befestigtes Befestigungsteil (131) aufweist, ein Trägerteil (111), das sich von dem Strebenteil nach vorne erstreckt, sowie ein Lastaufnahmeteil (113), das an dem Trägerteil (111) angebracht ist und gegenüber einer Fahrzeugbreitenrichtung geneigt ist, wenn man das Fahrzeug von der Ober- oder Unterseite her betrachtet, enthält.

2. Das Fahrzeug (10) vom Typ mit Aufsitzsattel nach Anspruch 1, worin das Trägerteil (111) eine Mehrzahl von Tragrohren (121, 122, 123, 124, 125) enthält, die sich in Längsrichtung des Fahrzeugs erstrecken; und ein Querelement (151), das in einer von der Richtung der Tragrohre (121, 122, 123, 124, 125) unterschiedlichen Richtung angeordnet ist, zwischen zumindest zwei, in der Fahrzeugbreitenrichtung aufgereihten Tragrohren der Mehrzahl von Tragrohren (121, 122, 123, 124, 125) überbrückend vorgesehen ist.

3. Das Fahrzeug vom Typ mit Aufsitzsattel nach Anspruch 1 oder 2, worin ein Ölkühler (133) an einem vorderen Abschnitt des Verbrennungsmotors (22) vorgesehen ist; und
der Stoßfänger (110) eine plattenförmige Tragplatte (116) aufweist, die an der Vorderseite des Ölkühlers (133) lokalisiert und parallel zur Vorderseite des Ölkühlers (133) angeordnet ist.

4. Das Fahrzeug (10) vom Typ mit Aufsitzsattel nach Anspruch 3, worin die Tragplatte (116) an ihrem einen Endabschnitt mit einem Basisteil (136) versehen ist, das so ausgebildet ist, dass es entlang der Außenform des Verbrennungsmotors (22) sitzt.

## Revendications

1. Véhicule de type à selle (10) comprenant un châssis (11) qui comporte un tube d'amenée (12) pour supporter à rotation un arbre de direction (13) pour une roue avant (17), et un cadre principal (21L, 21R) s'étendant vers l'arrière depuis le tube d'amenée (12), avec un moteur à combustion interne (22) monté sur le cadre principal (21L, 21R),
dans lequel un pare-chocs (110) destiné à recevoir une charge exercée depuis un côté avant de véhicule est disposé sur le côté avant d'une portion inférieure du moteur à combustion interne (22) ; et
le pare-chocs (110) comprend une partie d'étai ayant une partie de fixation (131) fixée au moteur à combustion interne (22), une partie de support (111) s'étendant vers l'avant de la partie d'étai, et une partie de réception de charge (113) montée sur la partie de support (111) et inclinée dans une direction de largeur de véhicule lorsque le véhicule est vu du côté supérieur ou inférieur.

2. Véhicule de type à selle (10) selon la revendication 1,
dans lequel la partie de support (111) comprend une pluralité de tubes de support (121, 122, 123, 124, 125) s'étendant dans une direction longitudinale du véhicule ; et
une traverse (151) disposée dans une direction différente de la direction des tubes de support (121, 122, 123, 124, 125) est disposée en entretoisement entre au moins deux tubes de support disposés en réseau dans la direction de la largeur de véhicule de la pluralité de tubes de support (121, 122, 123, 124, 125).

3. Véhicule de type à selle selon la revendication 1 ou 2,
dans lequel un refroidisseur d'huile (133) est disposé au niveau d'une portion avant du moteur à combustion interne (22) ; et
le pare-chocs (110) comprend une plaque de support conformée en plaque (116) située du côté avant du refroidisseur d'huile (133) et disposée parallèlement à une surface avant du refroidisseur d'huile (133).

4. Véhicule de type à selle (10) selon la revendication 3, dans lequel la plaque de support (116) est pourvue au niveau d'une portion d'extrémité de celle-ci d'une partie de base (136) formée pour être placée le long de la forme externe du moteur à combustion interne (22).
